# EUROPÄISCHE PATENTSCHRIFT

(11) **EP 1 538 379 B1**
(45) Veröffentlichungstag und Bekanntmachung des Hinweises auf die Patenterteilung: **27.05.2009**
(21) Anmeldenummer: 04090434.4
(22) Anmeldetag: 15.11.2004
(51) Int. Cl.: F16K 31/56

(54) **Schnellschlussventil zum Unterbrechen eines Fluidstroms**
Quick action stop valve
Soupape à fermeture rapide

(30) Priorität: 04.12.2003 DE 10357423
(43) Veröffentlichungstag der Anmeldung: 08.06.2005
(73) Patentinhaber: Rolls-Royce Deutschland Ltd & Co KG, 15827 Dahlewitz (DE)
(72) Erfinder: Opper, Hans Otto Dipl.-Ing, 12307 Berlin (DE)
(74) Vertreter: Wablat, Wolfgang

(56) Entgegenhaltungen:
- WO-A-90/07670
- DE-A- 3 518 430
- DE-A1- 10 046 998
- DE-A1- 10 159 510
- GB-A- 808 577
- GB-A- 1 019 937
- GB-A- 1 293 375
- US-A- 3 095 901

## Beschreibung

Die Erfindung bezieht sich auf ein Schnellschlussventil zum Unterbrechen eines Fluidstromes gemäß dem Oberbegriff des Patentanspruches 1 und der nebengeordneten Patentansprüche 2 und 3.

In vielen Anwendungsfällen ist es erforderlich, einen Medienstrom möglichst schnell zu unterbrechen. Beispielsweise bei Strahltriebwerken stellt ein Wellenbruch, insbesondere der Bruch der Niederdruckturbinenwelle, ein erhebliches Gefährdungspotential für Menschen und Sachwerte dar. Bei einem Wellenbruch kommt es zu einem unkontrollierten Drehzahlanstieg des die Energie erzeugenden Teils der Welle, der von dem die Energie aufnehmenden Wellenabschnitt abgetrennt ist. Infolgedessen können das Triebwerk und das Flugzeug beschädigt oder zerstört werden. Um die negativen Folgen eines Wellenbruchs möglichst zu begrenzen, ist es zunächst notwendig, diesen Zustand so schnell wie möglich zu erfassen und danach auf der Grundlage eines den Wellenbruch anzeigenden Signals die weitere Kraftstoffzufuhr in kürzester Zeit zu unterbrechen.

Bei einer bekannten Vorrichtung zum mechanischen Erfassen eines Wellenbruchs erfolgt auch die Unterbrechung der Kraftstoffzufuhr mit mechanischen Kraftübertragungsmitteln, beispielsweise mit einem Seilzug. Abgesehen von der konstruktiv aufwendigen und verschleißanfälligen Ausbildung ist bei der mechanische Auslösung die Zeitspanne bis zum Absperren des Kraftstoffflusses zur Brennkammer der Fluggasturbine so lang, dass Folgeschäden auftreten können.

Aus der GB 10 19 937 A ist ein Schnellschlussventil zum Unterbrechen eines Fluidstroms bekannt, das ein Ventilgehäuse mit einem Ventilsitz und einem Verschlussorgan umfasst. Ein mit dem Verschlussorgan verbundener Ventilschaft ist an ein mit einem Antriebskolben verbundenes Hebelsystem angeschlossen, um das Ventil in der Durchflussstellung zu halten bzw. die Bewegung des Verschlussorgans in die Schließstellung freizugeben. Der an der Fluideintrittsseite wirkende mechanische Druck ist größer als der austrittsseitig am Verschlussorgan wirkende Fluiddruck, so dass das Ventil nach Freigabe des Ventilschaftes selbsttätig schließt.

Bei einem in der DE 35 18 430A beschriebenen Ventil zur automatischen Unterbrechung einer Gasströmung greift ein elektromagnetisch betätigter Verriegelungsstift in eine Nut eines Ventilschaftes ein, um das Verschlussorgan in der Offenstellung zu halten und durch Zurückziehen des Verriegelungsstiftes das Ventil selbsttätig zu schließen.

Bei einer aus der US 47 12 372 bekannten elektronischen Einrichtung zum Erkennen einer Überdrehzahl und zum Unterbrechen der Kraftstoffzufuhr wird bei einem Wellenbruch ein elektrisches Signal erzeugt, um das Verschlussorgan des Kraftstoff-Absperrventils elektromagnetisch zu betätigen.

Jedoch ist auch in diesem Fall der Zeitraum von der Betätigung des Elektromagneten bis zur Unterbrechung des Kraftstoffflusses durch das Verschlussorgan des Schnellschlussventils nicht kurz genug, um Folgeschäden durch die Überdrehzahl des bis zum Ansprechen des Ventils weiter angetriebenen Wellenteils mit Sicherheit auszuschließen. In diesem Fall sind zusätzliche, konstruktiv aufwendige Sicherheitsmaßnahmen erforderlich.

Der Erfindung liegt die Aufgabe zugrunde, ein Schnellschlussventil der gattungsgemäßen Art anzugeben, das einen Fluidstrom in wenigen Millisekunden unterbrechen kann.

Erfindungsgemäß wird diese Aufgabe mit einerm gemäß den kennzeichnenden Merkmalen des Patentanspruches 1 und der nebengeordneten Patentansprüche 2 und 3 ausgebildeten Schnellschlussventil gelöst. Aus den Unteransprüchen 4 bis 9 ergeben sich weitere Merkmale und vorteilhafte Weiterbildungen der Erfindung.

Bei einem durch ein elektrisches Signal angezeigten Ereignis, das eine schnelle Unterbrechung der weiteren Fluidzufuhr erforderlich macht, wird das betreffende Schnellschlussventil nicht unmittelbar durch eine elektromagnetische Kraftwirkung, sondern allein durch ständig auf das verriegelte Verschlussorgan wirkende mechanische Kräfte nach dessen elektromagnetisch betätigter Entriegelung geschlossen. Da die Entriegelung mit einem klein und leicht ausgebildeten Elektromagneten nur geringe Kräfte erfordert und der eigentliche Schließvorgang allein aufgrund der ständig anliegenden mechanischen Kräfte erfolgt, ist die Schließzeit - gerechnet vom Zeitpunkt der Auslösung des Elektromagneten - äußerst gering. Infolge der extrem kurzen Schließzeit entfallen die bei langer Schließzeit aus Sicherheitsgründen ansonsten erforderlichen zusätzlichen - kostenaufwendigen - konstruktiven Maßnahmen.

Bei einem in eine Fluidleitung eingebunden Schnellschlussventil, das ein Ventilgehäuse mit einer Fluideintritts- und einer Fluidaustrittsöffnung und einen zwischen diesen angeordneten Ventilsitz mit Verschlussorgan umfasst, ist ein aus dem Ventilgehäuse abdichtend nach außen geführter Ventilschaft vorgesehen, der an der Außenseite des Ventilgehäuses mit einem beweglichen Verriegelungselement in einer Betriebsstellung gehalten ist, in der das Fluid ununterbrochen strömt. Der das Verschlussorgan bildende, dem Ventilsitz zugeordnete Ventilteller teilt das Ventilgehäuse in eine Fluideintrittskammer (erster Druckraum) und eine Fluidaustritts- kammer (zweiter Druckraum) und ist auf der Seite der Fluidaustrittskammer mit dem Ventilschaft verbunden. Aufgrund der größeren Wirkfläche des Ventiltellers auf der Fluidein- trittsseite wirkt in der Fluid-eintrittskammer ständig eine größere Kraft auf das Verschlussorgan als auf der Seite der Fluidaustrittskammer, so dass bei einer Entriegelung des Ventilschaftes durch eine Lageveränderung des Verriegelungselements der Fluidstrom unmittelbar durch den in der Fluideintrittskammer herrschenden größeren Druck in wenigen Millisekunden unterbrochen wird.

Um auch den Zeitraum für die Lageveränderung des Verriegelungselements durch auf dieses wirkende, von dem Ventilschaft ausgehende Kräfte möglichst kurz zu halten, ist zwischen die Stirnfläche des Ventilschaftes und das Verriegelungselement eine Hebelanordnung geschaltet. Die verminderte Kraftwirkung auf des Verriegelungselement erleichtert die Betätigung des Verriegelungselements und verkürzt die Betätigungszeit. Insgesamt liegt somit der Zeitraum von dem an dem Verriegelungselement anliegenden Signal bis zur Unterbrechung des Fluidstroms im Bereich von wenigen Millisekunden. Ein bevorzugtes Anwendungsgebiet der Erfindung sind Fluggasturbinen. Dort wird bei der Detektion eines Wellenbruchs ein Signal erzeugt, auf dessen Grundlage das erfindungsgemäße Schnellschlussventil die weitere Kraftstoffzufuhr inweniger als 5 Millisekunden unterbricht. Dadurch ist eine hohe Sicherheit für Menschen und Material gewährleistet und andererseits können die Kosten für die sichere Auslegung des Triebwerks vermindert werden.

In vorteilhafter, ebenfalls auf eine Verringerung der Abschaltzeit gerichteter Weiterbildung der Erfindung ist das Verschlussorgan auch auf der Fluideintrittsseite geführt und zusätzlich mit einer Federkraft beaufschlagt.

Das Auftreten von Leckagen im Bereich der Ventilschaftführung wird durch Dichtelemente und einen Ringkanal zum Sammeln von Leckagefluid verhindert. Das Leckagefluid wird über eine Bohrung im Ventilgehäuse und eine Pumpe wieder in das System zurückgeführt.

Eine weitere Verringerung der auf der Fluidaustrittsseite auf das Verschlussorgan wirkenden Kräfte kann durch eine Form des Ventilsitzes erreicht werden, die zwischen Ventilsitz und Ventilteller einen Strömungskanal zur Erzielung einer hohen Strömungsgeschwindigkeit und damit zur Senkung des statischen Druckes auf der Fluidaustrittsseite des Verschlussorgans erzeugt. Damit ist eine weitere Verringerung der Schließzeit verbunden.

Das verriegelungselement ist ein von einem Elektromagneten infolge eines detektierten Ereignisses (Wellenbruch in der Fluggasturbine) erzeugten elektrischen Signals betätigter Verriegelungsstift.

Die Hebelanordnung zwischen Ventilschaft und Verriegelungsstift, die die Betätigung des Verriegelungsstiftes erleichtern und die Betätigungszeit verkürzen soll, ist erfindungsgemäß so gestaltet, dass der Verriegelungsstift am Ende des langen Hebelarms eines verschwenkbaren, die Stirnfläche des Ventilschaftes kontaktierenden Winkelhebels angreift.

Die Freigabe dieses Winkelhebels kann in weiterer Ausbildung der Erfindung auch mit einem zwischengeschalteten Drehhebel erfolgen, der von dem Verriegelungsstift in dessen Bewegungsrichtung betätigt wird.

Die Hebelanordnung kann erfindungsgemäß auch einen mit der Stirnfläche des Ventilschaftes gelenkig verbundenen Gelenkhebel umfassen, dessen seitliche Auslenkung durch Bewegen des Verriegelungsstiftes freigegeben wird und damit den Schließvorgang ermöglicht.

Drei Ausführungsbeispiele des erfindungsgemäßen Schnellschlussventiles zum Unterbrechen enes Fluidstromes werden anhand der Zeichnungen näher erläutert. Es zeigen:
Fig. 1 einen Schnitt durch das erste Ausführungsbeispiel.
Fig. 2 einen Schnitt durch das zweite Ausführungsbesispiel und
Fig. 3 einen Schnitt durch das dritte Ausführungsbeispiel.

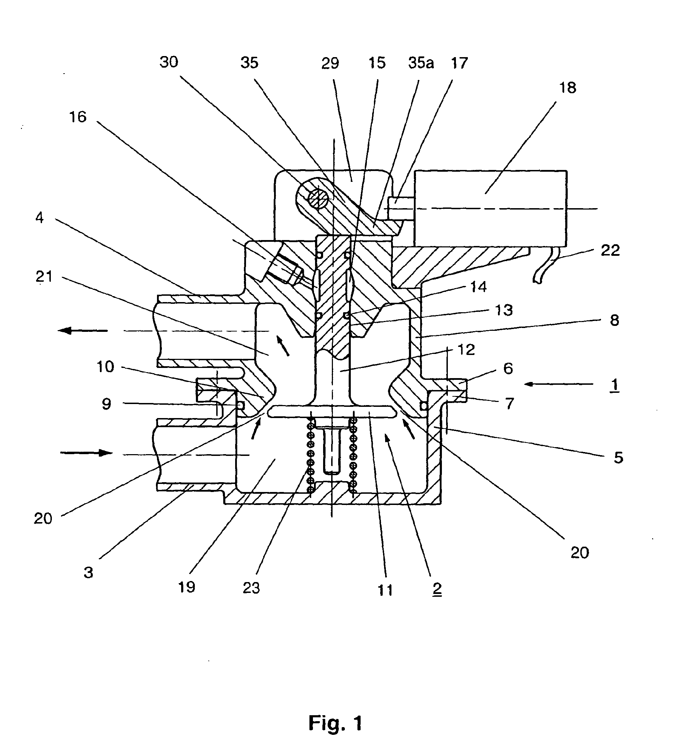

Gemäß den Figuren 1 bis 3 umfasst das Schnellschlussventil ein Ventilgehäuse 1, ein in diesem beweglich geführtes Verschlussorgan 2 und einen Auslösemechanismus zur Freigabe der Schließbewegung des Verschlussorgans 2 zur Unterbrechung der weiteren Zufuhr des durch das Ventilgehäuse 1 strömenden Kraftstoffs zur Brennkammer einer Fluggasturbine im Falle eines detektierten und durch ein elektrisches Signal angezeigten Wellenbruchs. Das zweiteilig ausgeführte Ventilgehäuse 1 ist über einen Fluideintrittsöffnung 3 und einen Fluidaustrittsöffnung 4 in eine Kraftstoffleitung (nicht dargestellt) eingebunden. Es besteht aus einem Gehäuseunterteil 5 und einem an diesem mittels durch Schrauben verbundener Flansche 6, 7 befestigten Gehäuseoberteil 8. Zur Abdichtung zwischen dem Gehäuseober- und -unterteil sind Gehäusedichtungen 9 vorgesehen. Das Gehäuseoberteil 8 bildet mit seinem in das Gehäuseunterteil 5 eingreifenden Abschnitt einen Ventilsitz 10 für einen Ventilteller 11 des Verschlussorgans 2, dessen Ventilschaft 12 in einem in dem Gehäuseoberteil 8 ausgebildeten Ventilschaftführungskanal 13 mit Hilfe von Schaftdichtungen 14 abdichtend geführt ist. Der Ventilschaftführungskanal 13 bildet mit dem Ventilschaft 12 einen Ringkanal 15 zum Auffangen von Leckage-Kraftstoff, der über eine Bohrung 16 im Gehäuseoberteil 8 abgesaugt und zum Kraftstoffbehälter (nicht dargestellt) zurückgeführt werden kann. Der Ventilteller 11 steht an seiner Unterseite unter der Wirkung eines als Schraubendruckfeder 23 ausgebildeten Federelements. An der dem Ventilteller 11 entgegengesetzten Stirnseite des Ventilschaftes 12 wird das Verschlussorgan 2, das heißt, der an dem Ventilschaft 12 befindliche Ventilteller 11 mit dem Verriegelungsstift 17 eines Elektromagneten 18 - entweder direkt (nicht dargestellt) oder über ein weiter unten erläutertes Hebelsystem - im Abstand von dem Ventilsitz 10, und zwar entgegen dem auf die Unterseite des Ventiltellers 11 wirkenden Federdruckes und des von dem strömenden Medium auf den Ventilteller 11 ausgeübten Druckes gehalten. In der stirnseitig verriegelten Position des Verschlussorgans 2, das heißt, wenn der Elektromagnet 18 im Normalbetrieb kein elektrisches Signal über einen Wellenbruch in der Fluggasturbine empfängt, strömt der Kraftstoff von der Fluideintrittskammer 19 (erster Druckraum unterhalb des Ventiltellers 11) über den zwischen dem Ventilteller 11 und dem Ventilsitz 10 bestehenden Ringspalt 20 in die Fluidaustrittskammer 21 (zweiter Druckraum oberhalb des Ventiltellers 11) und von dort über die Fluidaustrittsöffnung 4 und die an diesen anschließende Kraftstoffleitung zur Brennkammer (jeweils nicht dargestellt).

Bei einem Wellenbruch wird mit einer hier nicht erläuterten Vorrichtung ein elektrisches Signal erzeugt und über ein Verbindungskabel 22 zum Elektromagneten 18 geleitet. Daraufhin wird der Verriegelungsstift 17 des Elektromagneten 18 zurückgezogen und somit die Bewegung des Ventilschafts 12 freigegeben, so dass der Ventilteller 11 aufgrund der auf diesen wirkenden mechanischen Kräfte gegen den Ventilsitz 10 gepresst und damit die Kraftstoffzufuhr unterbrochen wird. Da die untere, die Fluideintrittskammer 19 begrenzende Fläche größer als die obere, in der Fluidaustrittskammer 21 liegende Fläche ist und die eintrittsseitig ausgeübten mechanischen Kräfte deutlich höher als die von dem Medium in der Fluidaustrittskammer 21 ausgehenden Kräfte sind, wird der Ventilteller 11 mit dem Zurückziehen (Freigeben) des Verriegelungsstiftes 17 unmittelbar durch den eintrittsseitig durch den Kraftstoff bewirkten Druck und zusätzlich durch den Druck der Schraubendruckfeder 23 betätigt. Um Schäden durch den beim Schließen des Schnellschlussventils auftretenden hohen Druck zu vermeiden, ist ein Überdruckventil (nicht dargestellt) vorgesehen, das üblicherweise schon Bestandteil der Kraftstoffpumpe ist.

Ein wesentlicher Aspekt der am Beispiel der Figuren 1 bis 3 erläuterten Erfindung liegt mithin darin, dass die Schließbewegung des Verschlussorgans unmittelbar durch Federdruck und das strömende Medium selbst bewirkt wird, da aufgrund der konstruktiven Ausbildung des Verschlussorgans 2 der Druck auf der Kraftstoffeintrittsseite größer als Druck auf der Kraftstoffaustrittsseite ist. Daher kann mit der Erzeugung eines den Wellenbruch anzeigenden elektrischen Signals die Kraftstoffzufuhr in kürzester Zeit, das heißt, in einem Zeitraum von wenigen Millisekunden, unterbrochen werden, da der Kraft- und Zeitaufwand für das Freigeben des verriegelten Verschlussorgans /Ventilschaftes gering ist.

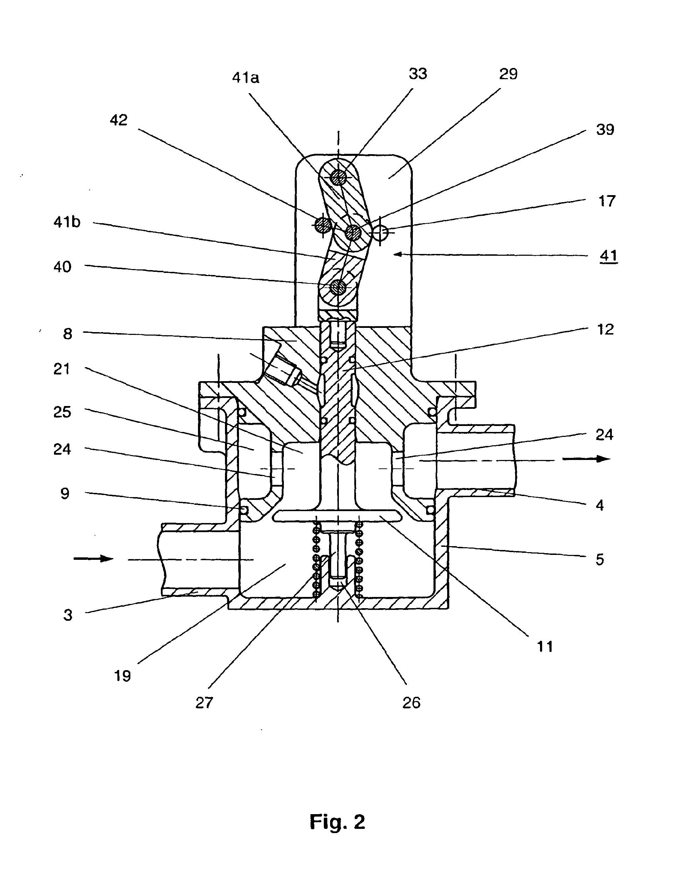

Wie die Figuren 1 bis 3 zeigen, kann das Ventilgehäuse 1 unterschiedlich ausgebildet sein: Gemäß Fig. 2 ist das Gehäuseoberteil 8 so ausgebildet, dass sich an die Fluidaustrittskammer 19 noch ein von dem Gehäuseoberteil 8 und der Seitenwand des Gehäuseunterteils 5 eingeschlossener, über Öffnungen 24 verbundener Austrittsraum 25 anschließt. Bei dieser Ausführungsform des Ventilgehäuses 1 ist am Boden des Gehäuseunterteils 5 ein weiterer Führungskanal 26 ausgebildet, in dem ein an der Unterseite des Ventiltellers 11 angeformter Zapfen 27 geführt ist. Diese zusätzliche Führung des Verschlussorgans 2 trägt gerade bei hohen Strömungsgeschwindigkeiten zur Schwingungsdämpfung und damit zur Verringerung der vom Ventilschaft 12 auf den Verriegelungsstift 17 ausgeübten Kräfte bei. Je geringer die vom Verschlussorgan 2 auf den Verriegelungsstift 17 ausgeübte Kraft ist, desto schneller kann der Verriegelungsstift 17 bei einem Wellenbruch zurückgezogen und damit die Schließzeit des Ventils weiter verkürzt werden.

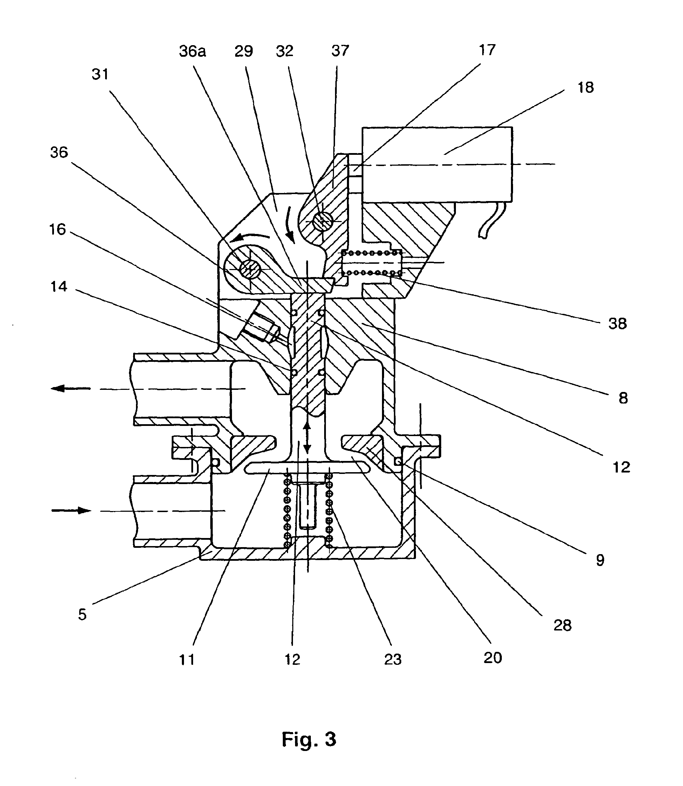

Fig. 3 zeigt noch eine andere Ausführungsform des Ventilgehäuses 1, und zwar insofern, als der Ventilsitz 10 durch einen Profilring 28 gebildet ist. Dieser Profilring 28 ist so geformt, dass er relativ weit über die obere Fläche des Ventiltellers 11 reicht und in dem dadurch erzeugten langen, engen Spalt eine maximale Strömungsgeschwindigkeit des Kraftstoffs an der oberen Ventiltellerfläche erzeugt wird. Das hat gegenüber der unteren Fläche des Ventiltellers 11 einen verminderten statischen Druck an der oberen Ventiltellerfläche zur Folge, so dass die von dem Kraftstoff in der Fluideintrittskammer 19 bewirkte Schließkraft weiter erhöht wird und das Schnellschlussventil bei einem Wellenbruch noch schneller anspricht.

Wenn das Verschlussorgan 2 unmittelbar auf den Verriegelungsstift 17 des Elektromagneten 18 wirkt, sind die zum Zurückziehen des Verriegelungsstiftes erforderlichen Kräfte und der entsprechende Zeitaufwand hoch. Um die von dem Ventilschaft 12 auf den Verriegelungsstift 17 ausgeübte Kraft möglichst gering zu halten und den Verriegelungsstift 17 mit geringer Kraft möglichst schnell zurückziehen zu können, sind, wie die Figuren 1 bis 3 zeigen, verschiedene Hebelmechanismen vorgesehen, die nachfolgend erläutert werden.

Zur drehbaren Lagerung der zwischen Verriegelungsstift 17 und Ventilschaft 12 geschalteten Hebel sind am Gehäuseoberteil 8 des Ventilgehäuses 1 Halteplatten 29 mit zwischen diesen angebrachten Drehachsen 30 bis 33 zur schwenkbaren Lagerung der Hebel bzw. des Hebelsystems befestigt. Gemäß Fig. 1 ist an der Drehachse 30 ein Winkelhebel 35 gelagert, dessen abgewinkelter langer Hebelarm 35a sich an einem Ende auf der Stirnfläche des Ventilschaftes 12 abstützt und am anderen Ende auf der gegenüberliegenden Seite durch den Verriegelungsstift 17 des Elektromagneten 18 gehalten ist. Aufgrund des zwischengeschalteten langen Hebelarms 35a ist die auf den Verriegelungsstift 17 wirkende Kraft relativ gering, so dass dieser schnell von dem Elektromagnet 18 zurückgezogen wird und damit die zwischen der Signalisierung des Wellenbruchs durch ein an dem Elektromagneten anliegendes elektrisches Signal und dem Schließen des Schnellschlussventils weiter verkürzt wird und letztlich nur wenige Millisekunden beträgt.

Die Schließzeit kann weiter verkürzt werden, wenn auf den Verriegelungsstift 17, wie in Fig. 3 dargestellt, keine senkrechte Kraft wirkt, sondern dieser in seiner Bewegungsrichtung axial gehalten ist. Bei dieser Ausführungsvariante wird der lange Hebelarm 36a eines um die Drehachse 31 schwenkbaren Winkelhebels 36 durch einen um die Drehachse 32 schwenkbaren, von einer Feder 38 gehaltenen Drehhebel 37 arretiert. Bei einem durch Wellenbruch erzeugten elektrischen Signal wird der Verriegelungsstift 17 aus dem Elektromagneten 18 in Richtung des Drehhebels 37 ausgefahren. Durch die Schwenkbewegung des Drehhebels 37 wird der Winkelhebel 36 und damit die Bewegung des Verschlussorgans 2 freigegeben.

Eine dritte Ausführungsvariante des Hebelmechanismus zur Freigabe der Schließbewegung des Verschlussorgans 2 ist in Fig. 2 wiedergegeben. Ein durch ein erstes Drehgelenk 39 verbundener, aus zwei Teilen 41a,b bestehender Gelenkhebel 41 ist über ein zweites Drehgelenk 40 stirnseitig mit dem Ventilschaft 12 fest verbunden. Der Gelenkhebel 41 ist an seinem freien Ende um eine feste Drehachse 33 schwenkbar gelagert und im Betriebszustand in einer abgewinkelten Lage zwischen einem festen Anschlag 42 und dem durch den Elektromagneten 18 verstellbaren Verriegelungsstift 17 arretiert. Bei einem durch Wellenbruch erzeugten elektrischen Signal wird der Verriegelungsstift 17 zurückgezogen und die Winkelbewegung des Gelenkhebels 41 und damit die Schließbewegung des Verschlussorgans 2 freigegeben.

Die Erfindung ist nicht auf die zuvor beispielhaft erläuterten Ausführungsformen beschränkt. Im Rahmen des Grundgedankens der Erfindung, wonach ein von einem Elektromagneten betätigbarer Verriegelungsstift das Verschlussorgan eines Schnellschlussventils, das auf der Kraftstoffanströmseite unter einem höheren Druck als auf der Kraftstoffabströmseite steht, mittelbar in einer Betriebstellung hält und das Verschlussorgan bei einem durch ein Ereignis erzeugten Signal freigibt und den Medienstrom unmittelbar durch den von dem Medium selbst erzeugten Druck unterbricht, sind vielfältige Modifikationen rein konstruktiver Art möglich.

### Bezugszeichenliste

- 1: Ventilgehäuse
- 2: Verschlussorgan
- 3: Fluideintrittsöffnung
- 4: Fluidaustrittsöffnung
- 5: Gehäuseunterteil
- 6: Flansch
- 7: Flansch
- 8: Gehäuseoberteil
- 9: Gehäusedichtung
- 10: Ventilsitz
- 11: Ventilteller
- 12: Ventilschaft
- 13: Ventilschaftführungskanal
- 14: Schaftdichtungen
- 15: Ringkanal (Leckagefluidsammelkanal)
- 16: Bohrung
- 17: Verriegelungselement/Verriegelungsstift
- 18: Elektromagnet
- 19: Fluideintrittskammer
- 20: Ringspalt zwischen 19 und 21
- 21: Fluidaustrittskammer
- 22: Verbindungskabel
- 23: Federelement/Schraubendruckfeder
- 24: Öffnung in 8
- 25: Austrittsraum
- 26: Führungskanal in 5
- 27: Zapfen von 11
- 28: Profilring (Ventilsitz)
- 29: Halteplatten
- 30: Drehachse von 35
- 31: Drehachse von 36
- 32: Drehachse von 37
- 33: Drehachse von 41
- 35: Winkelhebel
- 35a: langer Hebelarm
- 36: Winkelhebel
- 36a: langer Hebelarm
- 37: Drehhebel
- 38: Feder
- 39: erstes Drehgelenk von 41
- 40: zweites Drehgelenk von 41
- 41: Gelenkhebel
- 41a,b: Hebelteile von 41
- 42: Anschlag

## Patentansprüche

1. Schnellschlussventil zum Unterbrechen eines Fluidstroms, das ein Ventilgehäuse (1) mit einem Ventilsitz (10) und einem Verschlussorgan (2) umfasst und über eine Fluideintritts- und eine Fluidaustrittsöffnung (3, 4) in eine Fluidleitung eingebunden ist, wobei das Verschlussorgan (2) einen aus dem Ventilgehäuse (1) abdichtend nach außen geführten Ventilschaft (12) aufweist, der außerhalb des Ventilgehäuses (1) unter Zwischenschaltung einer Hebelanordnung durch ein Verriegelungselement in einer Durchflussstellung des Fluids zwischen dem Verschlussorgan (2) und dem Ventilsitz (10) gehalten ist, und wobei das Verschlussorgan (2) so ausgebildet ist, dass der auf der Fluideintrittsseite auf das Verschlussorgan (2) wirkende mechanische Druck größer als der austrittsseitig am Verschlussorgan wirkende Fluiddruck ist und das Schnellschlussventil nach Freigabe des Ventilschaftes (12) unmittelbar aufgrund des eintrittsseitig wirkenden höheren mechanischen Druckes schließt,
**dadurch gekennzeichnet,**
**dass** das Verriegelungselement ein indirekt über die der Kraftentkopplung dienende Hebelanordnung mit der freien Stirnfläche des Ventilschaftes (12) des Verschlussorgans (2) in Wirkverbindung stehender Verriegelungsstift (17) ist, der aufgrund eines durch ein detektiertes Ereignis erzeugten elektrischen Signals durch einen dem Ventilgehäuse (1) zugeordneten Elektromagneten (18) betätigbar ist, und
**dass** die Hebelanordnung einen um eine Drehachse (30) schwenkbar gelagerten, auf der Stirnfläche des Ventilschaftes (12) abgestützten Winkelhebel (35) mit langem Hebelarm (35a) umfasst, auf dessen freiem Ende der bewegliche Verriegelungsstift (17) abgestützt ist.

2. Schnellschlussventil zum Unterbrechen eines Fluidstroms, das ein Ventilgehäuse (1) mit einem Ventilsitz (10) und einem Verschlussorgan (2) umfasst und über eine Fluideintritts- und eine Fluidaustrittsöffnung (3, 4) in eine Fluidleitung eingebunden ist, wobei das Verschlussorgan (2) einen aus dem Ventilgehäuse (1) abdichtend nach außen geführten Ventilschaft (12) aufweist, der außerhalb des Ventilgehäuses (1) unter Zwischenschaltung einer Hebelanordnung durch ein Verriegelungselement in einer Durchflussstellung des Fluids zwischen dem Verschlussorgan (2) und dem Ventilsitz (10) gehalten ist, und wobei das Verschlussorgan (2) so ausgebildet ist, dass der auf der Fluideintrittsseite auf das Verschlussorgan (2) wirkende mechanische Druck größer als der austrittsseitig am Verschlussorgan wirkende Fluiddruck ist und das Schnellschlussventil nach Freigabe des Ventilschaftes (12) unmittelbar aufgrund des eintrittsseitig wirkenden höheren mechanischen Druckes schließt,
**dadurch gekennzeichnet,**
**dass** das Verriegelungselement ein indirekt über die der Kraftentkopplung dienende Hebelanordnung mit der freien Stirnfläche des Ventilschaftes (12) des Verschlussorgans (2) in Wirkverbindung stehender Verriegelungsstift (17) ist, der aufgrund eines durch ein detektiertes Ereignis erzeugten elektrischen Signals durch einen dem Ventilgehäuse (1) zugeordneten Elektromagneten (18) betätigbar ist, und
**dass** die Hebelanordnung einen an dem einen Ende der Stirnfläche des Ventilschaftes (12) gelenkig verbundenen und am gegenüberliegenden Ende fest angelenkten Gelenkhebel (41) umfasst, der im Bereich des die beiden Hebelteile (41a, 41b) verbindenden Drehgelenks (40) auf einer Seite durch einen festen Anschlag (42) und auf der anderen Seite durch den beweglichen Verriegelungsstift (17) gehalten ist.

3. Schnellschlussventil zum Unterbrechen eines Fluidstroms, das ein Ventilgehäuse (1) mit einem Ventilsitz (10) und einem Verschlussorgan (2) umfasst und über eine Fluideintritts- und eine Fluidaustrittsöffnung (3, 4) in eine Fluidleitung eingebunden ist, wobei das Verschlussorgan (2) einen aus dem Ventilgehäuse (1) abdichtend nach außen geführten Ventilschaft (12) aufweist, der außerhalb des Ventilgehäuses (1) unter Zwischenschaltung einer Hebelanordnung durch ein Verriegelungselement in einer Durchflussstellung des Fluids zwischen dem Verschlussorgan (2) und dem Ventilsitz (10) gehalten ist, und wobei das Verschlussorgan (2) so ausgebildet ist, dass der auf der Fluideintrittsseite auf das Verschlussorgan (2) wirkende mechanische Druck größer als der austrittsseitig am Verschlussorgan (2) wirkende Fluiddruck ist und das Schnellschlussventil nach Freigabe des Ventilschaftes (12) unmittelbar aufgrund des eintrittsseitig wirkenden höheren mechanischen Druckes schließt,
**dadurch gekennzeichnet,**
**dass** das Verriegelungselement ein indirekt über die der Kraftentkopplung dienende Hebelanordnung mit der freien Stirnfläche des Ventilschaftes (12) des Verschlussorgans (2) in Wirkverbindung stehender Verriegelungsstift (17) ist, der aufgrund eines durch ein detektiertes Ereignis erzeugten elektrischen Signals durch einen dem Ventilgehäuse (1) zugeordneten Elektromagneten (18) betätigbar ist, und
**dass** die Hebelanordnung einen um eine Drehachse (31) schwenkbaren Winkelhebel (36) mit langem, auf der Stirnfläche des Ventilschaftes (12) abgestütztem Hebelarm (36a) umfasst, der mit dem einen Ende eines zweiarmigen Drehhebels (37), an dessen anderem Ende der Verriegelungsstift (17) zum Verschwenken des Drehhebels (37) angreift, gehalten ist.

4. Schnellschlussventil nach einem der Ansprüche 1 bis 3, **dadurch gekennzeichnet, dass** das Verschlussorgan (2) einen mit dem Ventilschaft (12) verbundenen, in der Betriebsposition gegenüber dem Ventilsitz (10) einen Ringspalt (20) bildenden Ventilteller (11) umfasst, dessen eintrittsseitige Fläche zur Erzielung eines höheren Druckes größer als dessen austrittsseitige Fläche ist.

5. Schnellschlussventil nach Anspruch 4, **dadurch gekennzeichnet, dass** die Kontur des Ventilsitzes (10) gegenüber der austrittsseitigen Fläche des Ventiltellers (11) so geformt ist, das zur Verringerung des statischen Druckes auf der Austrittsseite des Ventiltellers (11) in der Durchflussposition ein kanalartiger enger Ringspalt (20) mit maximaler Strömungsgeschwindigkeit gebildet ist.

6. Schnellschlussventil nach Anspruch 4, **dadurch gekennzeichnet, dass** die eintrittsseitige Fläche des Ventiltellers (11) zur weiteren Erhöhung des an der Eintrittsseite des Fluids auf den Ventilteller (11) wirkenden mechanischen Druckes mit einem Federelement (23) in Wirkverbindung steht.

7. Schnellschlussventil nach einem der Ansprüche 1 bis 3, **dadurch gekennzeichnet, dass** das Ventilgehäuse (1) aus einem Gehäuseunterteil (5) mit einer Fluideintrittsöffnung (3) und einem Gehäuseoberteil (8) mit einer Fluidaustrittsöffnung (4) und angeformtem oder als separater Profilring (28) ausgebildetem Ventilsitz (10) besteht, wobei im Gehäuseoberteil (8) ein beidseitig offener Ventilschaftführungskanal (13) zur mittels Schaftdichtungen (14) abdichtenden Aufnahme des Ventilschaftes (12) vorgesehen ist.

8. Schnellschlussventil nach Anspruch 7, **dadurch gekennzeichnet, dass** ein von dem Ventilschaft (12) und dem Ventilschaftführungskanal (13) begrenzter Ringkanal (15) zum Sammeln von Leckagefluid vorgesehen ist, der mit einer Bohrung (16) im Gehäuseoberteil (8) zum Abführen des Leckagefluids verbunden ist.

9. Schnellschlussventil nach Anspruch 7, **dadurch gekennzeichnet, dass** das Gehäuseunterteil (5) einen Führungskanal (26) aufweist, in dem ein mit der eintrittsseitigen Fläche des Ventiltellers (11) verbundener Zapfen (27) geführt ist.

## Claims

1. Quick-closing valve for the interruption of a fluid flow, which includes a valve housing (1) with a valve seat (10) and a closing element (2) and is incorporated in a fluid line via a fluid inlet and a fluid outlet port (3, 4), with the closing element (2) featuring a valve stem (12) extending out of - and being sealed in - the valve housing (1) which, outside of the valve housing (1), is held via interconnection of a lever arrangement by means of a locking element in a position enabling fluid to flow between the closing element (2) and the valve seat (10), and with the closing element (2) being designed such that the mechanical pressure acting upon the closing element (2) on the fluid inlet side exceeds the fluid pressure acting upon the closing element on the outlet side, and that the quick-closing valve is shut directly by the higher inlet-side mechanical pressure upon release of the valve stem (12), **characterized in that**
the locking element is a locking pin (17), which indirectly interacts with the free front face of the valve stem (12) of the closing element (2) via the lever arrangement provided for force de-coupling and which is actuatable by a solenoid (18) associated with the valve housing (1) on the basis of an electrical signal generated upon detection of an event, and that
the lever arrangement includes an angle lever (35) pivoting around a rotating axis (30), with long lever arm (35a) resting on the front face of the valve stem (12) and supporting at the free end the moveable locking pin (17).

2. Quick-closing valve for the interruption of a fluid flow, which includes a valve housing (1) with a valve seat (10) and a closing element (2) and is incorporated in a fluid line via a fluid inlet and a fluid outlet port (3, 4), with the closing element (2) featuring a valve stem (12) extending out of - and being sealed in - the valve housing (1) which, outside of the valve housing (1), is held via interconnection of a lever arrangement by means of a locking element in a position enabling fluid to flow between the closing element (2) and the valve seat (10), and with the closing element (2) being designed such that the mechanical pressure acting upon the closing element (2) on the fluid inlet side exceeds the fluid pressure acting upon the closing element on the outlet side, and that the quick-closing valve is shut directly by the higher inlet-side mechanical pressure upon release of the valve stem (12), **characterized in that**
the locking element is a locking pin (17), which indirectly interacts with the free front face of the valve stem (12) of the closing element (2) via the lever arrangement provided for force de-coupling and which is actuatable by a solenoid (18) associated with the valve housing (1) on the basis of an electrical signal generated upon detection of an event, and that
the lever arrangement includes a hinged lever (41) which, on the one end, is pivotally connected to the front face of the valve stem (12) and, on the opposite end, is firmly pivoted and is held, in the area of the swivel joint (40) connecting both lever parts (41 a, 41 b) by a fixed stop (42) on the one side and a moveable locking pin (17) on the other side.

3. Quick-closing valve for the interruption of a fluid flow, which includes a valve housing (1) with a valve seat (10) and a closing element (2) and is incorporated in a fluid line via a fluid inlet and a fluid outlet port (3, 4), with the closing element (2) featuring a valve stem (12) extending out of - and being sealed in - the valve housing (1) which, outside of the valve housing (1), is held via interconnection of a lever arrangement by means of a locking element in a position enabling fluid to flow between the closing element (2) and the valve seat (10), and with the closing element (2) being designed such that the mechanical pressure acting upon the closing element (2) on the fluid inlet side exceeds the fluid pressure acting upon the closing element (2) on the outlet side, and that the quick-closing valve is shut directly by the higher inlet-side mechanical pressure upon release of the valve stem (12), **characterized in that**
the locking element is a locking pin (17), which indirectly interacts with the free front face of the valve stem (12) of the closing element (2) via the lever arrangement provided for force de-coupling and which is actuatable by a solenoid (18) associated with the valve housing (1) on the basis of an electrical signal generated upon detection of an event, and that
the lever arrangement includes an angle lever (36) pivoting around a rotating axis (31) with long lever arm (36a) resting on the front face of the valve stem (12), and being held by the one end of a two-arm rotary lever (37), whose other end engages the locking pin (17) for pivoting the rotary lever (37).

4. Quick-closing valve in accordance with one of the Claims 1 to 3, **characterized in that** the closing element (2) includes a valve disk (11) connected to the valve stem (12), which, in the operating position, forms an annular gap (20) with the valve seat (10), with the inlet-side surface of the valve disk (11) being larger than its outlet-side surface to obtain a higher pressure.

5. Quick-closing valve in accordance with Claim 4, **characterized in that** the contour of the valve seat (10) towards the outlet-side surface of the valve disk (11) is such that in the flow position a channel-type, narrow annular gap (20) providing for maximum flow velocity is created to reduce the static pressure on the outlet side of the valve disk (11).

6. Quick-closing valve in accordance with Claim 4, **characterized in that** the inlet-side surface of the valve disk (11) interacts with a spring element (23) to further increase the mechanical pressure acting upon the valve disk (11) on the fluid inlet side.

7. Quick-closing valve in accordance with one of the Claims 1 to 3, **characterized in that** the valve housing (1) includes of a housing base (5) with a fluid inlet port (3), a housing top (8) with a fluid outlet port (4) and a valve seat (10) provided either as integral part or as separate profiled ring (28), with a valve stem guide (13) which is open at both ends being provided in the housing top (8) to accommodate the valve stem (12) and seal it by means of stem seals (14).

8. Quick-closing valve in accordance with Claim 7, **characterized in that** an annulus duct (15) confined by the valve stem (12) and the valve stem guide (13) for the collection of leakage fluid is provided which connects to a bore (16) in the housing top (8) for the discharge of the leakage fluid.

9. Quick-closing valve in accordance with Claim 7, **characterized in that** the housing base (5) is provided with a guide (26) which locates a pin (27) connected to the inlet-side surface of the valve disk (11).

## Revendications

1. Soupape à fermeture instantanée destinée à interrompre un flux de fluide, comprenant une cage de soupape (1) avec un siège de soupape (10) et un organe d'obturation (2), et intégrée dans une conduite de fluide par l'intermédiaire d'un orifice d'entrée de fluide et d'un orifice de sortie de fluide (3, 4), sachant que l'organe d'obturation (2) présente une tige de soupape (12) sortant vers l'extérieur de la cage de soupape (1) en assurant l'étanchéité et qui, hors de la cage de soupape (1) et sous intercalage d'un système de leviers, est maintenue par un élément de verrouillage dans une position d'écoulement du fluide entre l'organe d'obturation (2) et le siège de soupape (10), et que l'organe d'obturation (2) est formé de telle manière que la pression mécanique exercée sur l'organe d'obturation (2) du côté entrée de fluide est supérieure à la pression du fluide exercée sur l'organe d'obturation du côté sortie, et qu'après la libération de la tige de soupape (12), la soupape à fermeture instantanée se ferme immédiatement en raison de la pression mécanique supérieure exercée du côté entrée,
**caractérisée en ce que**
l'élément de verrouillage est une broche de verrouillage (17) qui, par l'intermédiaire du système de leviers servant au découplage de forces, est indirectement en liaison active avec la face frontale libre de la tige de soupape (12) de l'organe d'obturation (2), et qui peut être actionnée par un électroaimant (18) associé à la cage de soupape (1) sur la base d'un signal électrique généré par la détection d'un événement, et
que le système de leviers comprend un levier coudé (35) logé de manière pivotante autour d'un axe de rotation (30), s'appuyant sur la face frontale de la tige de soupape (12) avec un long bras de levier (35a), sur l'extrémité libre duquel s'appuie la broche de verrouillage (17) mobile.

2. Soupape à fermeture instantanée destinée à interrompre un flux de fluide, comprenant une cage de soupape (1) avec un siège de soupape (10) et un organe d'obturation (2), et intégrée dans une conduite de fluide par l'intermédiaire d'un orifice d'entrée de fluide et d'un orifice de sortie de fluide (3, 4), sachant que l'organe d'obturation (2) présente une tige de soupape (12) sortant vers l'extérieur de la cage de soupape (1) en assurant l'étanchéité et qui, hors de la cage de soupape (1) et sous intercalage d'un système de leviers, est maintenue par un élément de verrouillage dans une position d'écoulement du fluide entre l'organe d'obturation (2) et le siège de soupape (10), et que l'organe d'obturation (2) est formé de telle manière que la pression mécanique exercée sur l'organe d'obturation (2) du côté entrée de fluide est supérieure à la pression du fluide exercée sur l'organe d'obturation du côté sortie, et qu'après la libération de la tige de soupape (12), la soupape à fermeture instantanée se ferme immédiatement en raison de la pression mécanique supérieure exercée du côté entrée,
**caractérisée en ce que**
l'élément de verrouillage est une broche de verrouillage (17) qui, par l'intermédiaire du système de leviers servant au découplage de forces, est indirectement en liaison active avec la face frontale libre de la tige de soupape (12) de l'organe d'obturation (2), et qui peut être actionnée par un électroaimant (18) associé à la cage de soupape (1) sur la base d'un signal électrique généré par la détection d'un événement, et
que le système de leviers comprend un levier articulé (41) dont une extrémité est reliée de manière articulée à la face frontale de la tige de soupape (12) et l'extrémité opposée est articulée autour d'un axe fixe, et qui, dans la zone de l'articulation tournante (40) reliant les deux parties de levier (41 a, 41 b), est maintenu d'un côté par une butée fixe (42), et de l'autre côté par la broche de verrouillage (17) mobile.

3. Soupape à fermeture instantanée destinée à interrompre un flux de fluide, comprenant une cage de soupape (1) avec un siège de soupape (10) et un organe d'obturation (2), et intégrée dans une conduite de fluide par l'intermédiaire d'un orifice d'entrée de fluide et d'un orifice de sortie de fluide (3, 4), sachant que l'organe d'obturation (2) présente une tige de soupape (12) sortant vers l'extérieur de la cage de soupape (1) en assurant l'étanchéité et qui, hors de la cage de soupape (1) et sous intercalage d'un système de leviers, est maintenue par un élément de verrouillage dans une position d'écoulement du fluide entre l'organe d'obturation (2) et le siège de soupape (10), et que l'organe d'obturation (2) est formé de telle manière que la pression mécanique exercée sur l'organe d'obturation (2) du côté entrée de fluide est supérieure à la pression du fluide exercée sur l'organe d'obturation (2) du côté sortie, et qu'après la libération de la tige de soupape (12), la soupape à fermeture instantanée se ferme immédiatement en raison de la pression mécanique supérieure exercée du côté entrée,
**caractérisée en ce que**
l'élément de verrouillage est une broche de verrouillage (17) qui, par l'intermédiaire du système de leviers servant au découplage de forces, est indirectement en liaison active avec la face frontale libre de la tige de soupape (12) de l'organe d'obturation (2), et qui peut être actionnée par un électroaimant (18) associé à la cage de soupape (1) sur la base d'un signal électrique généré par la détection d'un événement, et
que le système de leviers comprend un levier coudé (36) pouvant pivoter autour d'un axe de rotation (31) avec un long bras de levier (36a) s'appuyant sur la face frontale de la tige de soupape (12), et qui est maintenu par une extrémité d'un levier tournant à deux bras (37) et sur l'autre extrémité duquel s'applique la broche de verrouillage (17) afin de faire pivoter le levier tournant (37).

4. Soupape à fermeture instantanée selon une des revendications n° 1 à n° 3, **caractérisée en ce que** l'organe d'obturation (2) comprend une tête de soupape (11) reliée à la tige de soupape (12) et formant, dans la position de fonctionnement, un interstice annulaire (20) par rapport au siège de soupape (10), et dont la face côté entrée est plus grande que sa face côté sortie afin d'obtenir une pression supérieure.

5. Soupape de fermeture instantanée selon la revendication n° 4, **caractérisée en ce que** le contour du siège de soupape (10) vis-à-vis de la face côté sortie de la tête de soupape (11) est formé de telle manière que, pour réduire la pression statique du côté sortie de la tête de soupape (11) dans la position d'écoulement, se forme un étroit interstice annulaire (20) en forme de canal, avec une vitesse d'écoulement maximale.

6. Soupape de fermeture instantanée selon la revendication n° 4, **caractérisée en ce que**, pour encore augmenter la pression mécanique exercée sur la tête de soupape (11) du côté entrée du fluide, la face côté entrée de la tête de soupape (11) est en liaison active avec un élément à ressort (23).

7. Soupape à fermeture instantanée selon une des revendications n° 1 à n° 3, **caractérisée en ce que** la cage de soupape (1) est constituée d'un bas de cage (5) avec un orifice d'entrée de fluide (3) et d'un haut de cage (8) avec un orifice de sortie de fluide (4), et d'un siège de soupape (10) intégralement façonné ou formé par une bague profilée (28) distincte, sachant que dans le haut de cage (8) est prévu un canal de guidage de la tige de soupape (13) ouvert des deux côtés pour loger la tige de soupape (12) de manière étanche au moyen de joints de tige (14).

8. Soupape à fermeture instantanée selon la revendication n° 7, **caractérisée en ce qu'**est prévu un canal annulaire (15) limité par la tige de soupape (12) et le canal de guidage de la tige de soupape (13), destiné à recueillir du fluide de fuite et relié à un perçage (16) dans le haut de cage (8) pour évacuer le fluide de fuite.

9. Soupape à fermeture instantanée selon la revendication n° 7, **caractérisée en ce que** le bas de cage (5) présente un canal de guidage (26) dans lequel est guidée une cheville (27) reliée à la face côté entrée de la tête de soupape (11).
